# EUROPÄISCHE PATENTSCHRIFT

(11) **EP 1 262 377 B1**
(45) Veröffentlichungstag und Bekanntmachung des Hinweises auf die Patenterteilung: **07.04.2010**
(21) Anmeldenummer: 02009004.9
(22) Anmeldetag: 23.04.2002
(51) Int. Cl.: B60R 21/16

(54) **Knieschutzeinrichtung für Fahrzeuginsassen**
Knee protecting device for vehicle occupants
Dispositif de protection des genoux pour les occupants d'un véhicule

(30) Priorität: 01.06.2001 DE 10126864
(43) Veröffentlichungstag der Anmeldung: 04.12.2002
(73) Patentinhaber: Dr. Ing. h.c. F. Porsche AG, 70435 Stuttgart (DE)
(72) Erfinder: Kamm, Martin, 75223 Niefern-Öschelbronn (DE); Schnitzer, Jürgen, 74405 Gaildorf (DE)

(56) Entgegenhaltungen:
- DE-A1- 19 701 709
- DE-A1- 19 946 477
- DE-U1- 29 807 424

## Beschreibung

Die Erfindung bezieht sich auf eine Knieschutzeinrichtung für Fahrzeuginsassen mit wenigstens einem Gassack, der sich in aufgeblasenener Arbeitsstellung vor den Knien eines Fahrzeuginsassen erstreckt.

Eine derartige Knieschutzeinrichtung ist beispielsweise aus der DE 197 01 709 C2 bekannt. Diese Knieschutzeinrichtung umfaßt im wesentlichen eine querverlaufende Lastverteilerplatte, wobei zu beiden Seiten dieser Lastverteilerplatte jeweils ein Gassackabschnitt vorgesehen ist. An dieser Airbagausführung ist nachteilig, daß die Lastverteilerplatte durch das Aufblasen des Gassackes sehr stark beschleunigt wird, was ein erhöhtes Verletzungsrisiko für den Insassen bedeutet. Außerdem muß die Treibladung entsprechend stark ausgelegt werden, damit der Gassack schnell entfaltet werden kann. Hierdurch wird das Problem der starken Beschleunigung der Lastverteilerplatte weiter erhöht.

Eine weitere Knieschutzeinrichtung ist aus der DE 199 46 477 A bekannt. Diese betrifft eine Airbag-Anordnung für Kraftfahrzeuge mit wenigstens einem aufblasbaren Luftsack zur Anlage an eine gekrümmte Fläche einer Einrichtung in einem Kraftfahrzeug, wobei der Luftsack aus mehreren schlauchförmigen Modulen besteht. Bei aufgeblasenem Luftsack bilden die der gekrümmten Fläche zugewandten Umfangsteilflächen zusammen eine Anlagefläche des Luftsacks. Diese Anlagefläche ist zumindest näherungsweise an die gekrümmte Fläche angepasst.

Aufgabe der Erfindung ist es, eine verbesserte Knieschutzeinrichtung für Fahrzeuginsassen zu schaffen, so daß bei guter Funktion systembedingte Verletzungen der Knie des Fahrzeuginsassen beim Aufblasen der Knieschutzeinrichtung verhinderbar sind.

Diese Aufgabe wird erfindungsgemäß durch eine Knieschutzeinrichtung nach dem Patentanspruch 1 gelöst. Weitere vorteilhafte Ausführungsformen ergeben sich aus den Unteransprüchen.

Bei der erfindungsgemäßen Knieschutzeinrichtung wird auf eine Lastverteilerplatte verzichtet und die Knieschutzeinrichtung besteht lediglich aus zumindest zwei querverlaufenden, in Fahrzeuglängsrichtung gesehen unmittelbar hintereinanderliegend angeordneten Gassäcken bzw. mindestens einem Gaskissen, wobei die Gassäcke röhrenförmig aufgeführt sind und auf der den Knien zugewandten Seite über mindestens eine Gewebebrücke miteinander gekoppelt sind. Die Gassäcke sind zusätzlich auf der den Knien abgewandten Seite über Fixierlaschen mit dem Fahrzeugaufbau verbunden. Bei Druckanstieg in den beiden Gassäcken stützen sich diese gegenseitig ab und haben das Bestreben, bedingt durch eine konstruktive Überschneidung der beiden Röhrenabschnitte in der Mitte, sich voneinander wegzubewegen. Dies wird einerseits durch die Gewebebrücke und andererseits durch die Fixierlaschen verhindert. Bei optimaler Auslegung der Gewebebrücke und der Fixierlaschen wird ein lagestabiles Airbagsystem gebildet, bei dem die Gassäcke in sich, mit dem Gehäuse der Knieschutzeinrichtung und der Instrumententafel verspannt sind. Die Röhrenform des Gassackes bietet bei kleinstem Volumen die größte Oberfläche. Dadurch läßt sich in den Gassäcken sehr schnell ein hoher Druck aufbauen. Die erfindungsgemäße Knieschutzeinrichtung weist durch den Entfall der Lastverteilerplatte deutlich weniger Gewicht auf und zeichnet sich durch eine gute Funktion aus. Durch die einstückige Herstellung der beiden Röhrenabschnitte und der Gewebebrücke in einem sog. Drei-D-Webverfahren werden Nähte eingespart, was sich kostensenkend auswirkt.

Die Gassäcke sind entweder einzeln oder gemeinsam befüllbar. Bei einer gemeinsamen Befüllung sind in der verbindenden Gewebebrücke Luftkanäle vorgesehen, die eine gemeinsame Befüllung von einer Seite der Einrichtung her zulassen. Bei getrennter Befüllung der Gassäcke besteht keine Verbindung zwischen den Gassäcken und es erfolgt eine Befüllung separat in jeden Gassack.

Die geometrische Form der Gassäcke kann den Gegebenheiten im Fahrzeugaufbau bzw. im Cockpitbereich angepaßt werden, wobei die Gassäcke auch neben einer Röhrenform ellipsenförmig oder als sogenanntes Kissen ausgeführt sein können. Das Kissen kann ebenfalls verschiedene Kammern aufweisen, die einzeln oder gemeinsam befüllbar sind. Ebenfalls kann das Gaskissen mehrere nebeneinander angeordnete Röhren besitzen, die zueinander eine Vertiefung aufweisen.

Ein Ausführungsbeispiel der Erfindung ist in der Zeichnung dargestellt und wird im folgenden näher erläutert.

Es zeigen
- Fig. 1: eine Draufsicht auf eine Knieschutzeinrichtung für Fahrzeuginsassen, wobei der Gassack in aufgeblasener Arbeitsstellung gezeigt ist,

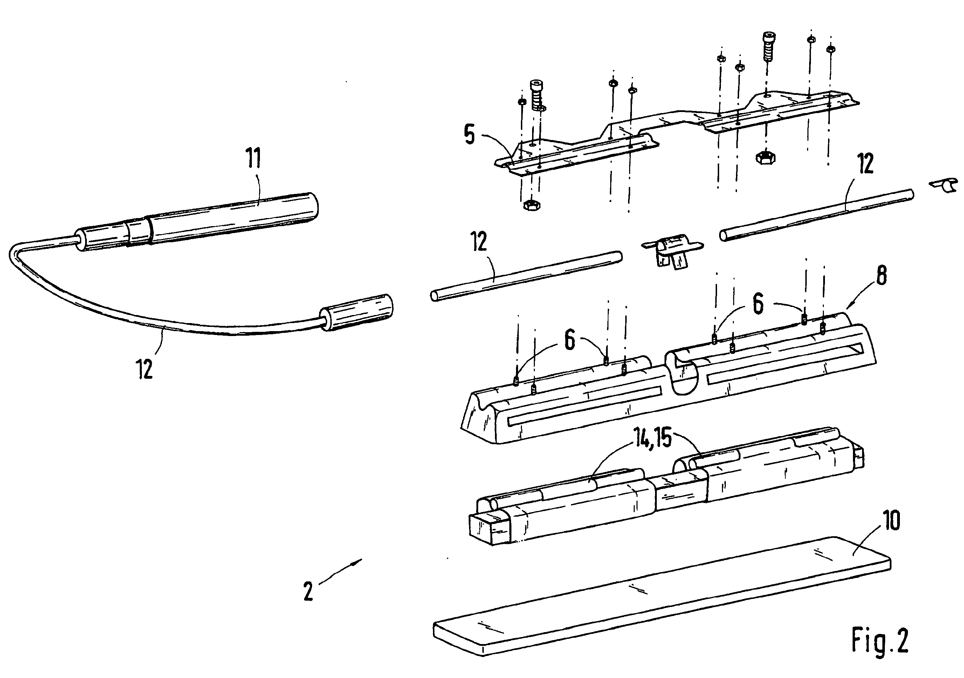

- Fig. 2: Einzelteile der Knieschutzeinrichtung in Explosionsdarstellung, wobei der Gassack seine zusammengefaltete Ruhestellung einnimmt,
- Fig. 3: einen Vertikalschnitt in Fahrzeuglängsrichtung durch die Knieschutzeinrichtung, wobei sich der Gassack in aufgeblasener Arbeitsstellung vor den Knien eines Fahrzeuginsassen erstreckt,
- Fig. 4: eine Draufsicht auf die Gassäcke gemäß einer ersten Ausführungsform mit zwei Befüllöffnungen und
- Fig. 5: eine Draufsicht auf die Gassäcke gem. einer zweiten Ausführungsform mit einer Befüllöffnung.

Vor dem Fahrer- und/oder Beifahrersitz eines Kraftfahrzeuges ist im wesentlichen innerhalb einer Instrumententafel 1 eine Knieschutzeinrichtung 2 für Fahrzeuginsassen 3 vorgesehen, die jeweils durch ein vorgefertigtes funktionsfähiges Modul 4 gebildet wird.

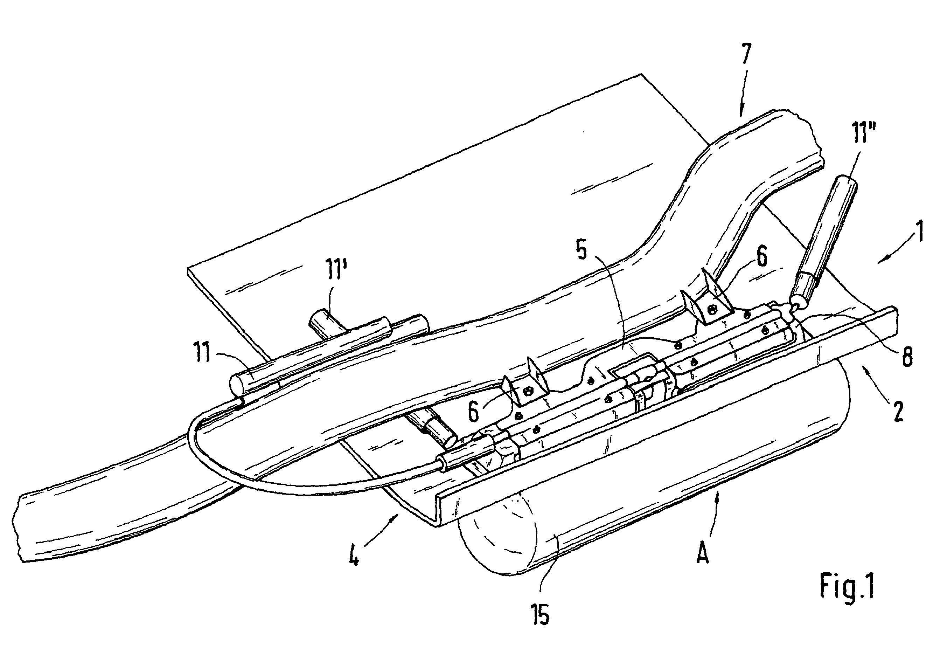

In Fig. 1 ist beispielsweise das beifahrerseitig angeordnete Modul 4 dargestellt, welches unter Vermittlung eines Haltebleches 5 mit beabstandet angeordneten Haltern 6 eines Querträgers 7 der Instrumententafel 1 fest verbunden ist. Dies kann beispielsweise durch Schraubverbindungen erfolgen. Jedes Modul 4 umfaßt ein langgestrecktes trogförmiges Gehäuse 8, einen oder mehrere zusammengefaltete Gassäcke 14, 15, eine Airbagabdeckung 10, einen Gasgenerator 11 und Gasführungsrohre 12.

In der nicht näher dargestellten Ruhestellung befinden sich sämtliche Bauteile des Moduls 4 verdeckt innerhalb der Instrumententafel 1. Beispielsweise bei einer definierten Verzögerung des Kraftfahrzeuges werden die Gassäcke 14, 15 durch den Gasgenerator 11 aufgeblasen und diese treten nach unten aus der Instrumententafel 1 hervor. In Fig. 1 sind drei unterschiedliche Anbringungsmöglichkeiten für den Gasgenerator mit den Bezugszeichen 11, 11' und 11" angedeutet.

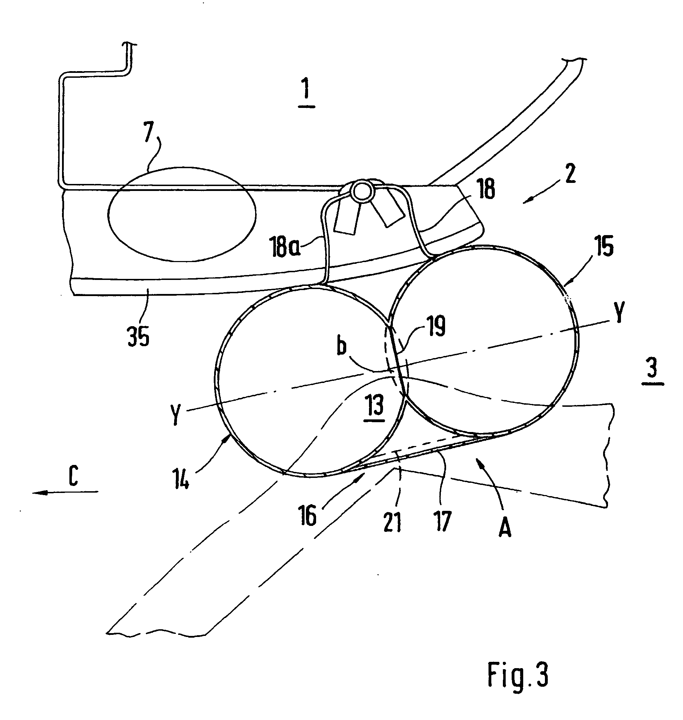

Die aufgeblasene Arbeitsstellung A der Gassäcke 14, 15 ist in Fig. 3 dargestellt. Die Gassäcke 14, 15 erstrecken sich in dieser Stellung A zwischen der Instrumententafel 1 und den Knien 13 eines Fahrzeugsinsassen 3 und können im Rückhaltefall anliegen den Knien 13 an, so daß diese an einer Vorverlagerung weitgehend gehindert werden.

Erfindungsgemäß setzen sich die Gassäcke 14, 15 - in aufgeblasener Arbeitsstellung A - aus zumindest zwei querverlaufenden, in Fahrzeuglängsrichtung gesehen, unmittelbar hinter- bzw. nebeneinanderliegend angeordneten Gassäcken zusammen, wobei die angrenzenden Gassäcke 14, 15 mit ihrer den Knien 13 zugewandten Seite 16 über eine etwa tangential verlaufende Gewebebrücke 17 miteinander gekoppelt sind. Ferner sind die Gassäcke 14, 15 auf der den Knien 13 abgewandten Seite über örtlich vorgesehene Fixierlaschen 18, 18a ortsfest gehalten.

Die beiden Gassäcke 14, 15 weisen etwa einen gleichen kreisförmigen Querschnitt und eine etwa gleiche Größe auf und sind jeweils an ihren beiden außenliegenden Enden geschlossen. In Arbeitsstellung A sind die querverlaufenden Gassäcke 14, 15 in etwa horizontal ausgerichtet. Der in Fahrtrichtung C gesehen weiter vorne liegende Gassack 14 liegt mit seinem unteren Rand etwas tiefer als der weiter hintenliegende Gassack 15.

Die Gassäcke 14, 15 können auch als ein sogenanntes Gaskissen ausgebildet sein, das mehrere Kammern besitzt, die einzeln oder gemeinsam befüllbar sind. Das Kissen kann nebeneinanderliegende Röhren aufweisen, die zueinander Vertiefungen besitzen. Ferner ist eine geringe konstruktive Überschneidung 19 (Fixierzone) der beiden Gassäcke 14, 15 in Fahrzeuglängsrichtung vorgesehen, d. h. die beiden Röhrenabschnitte 14, 15 überlappen sich in der Mitte theoretisch um ein Maß b (siehe Fig. 3).

Bei Druckanstieg in den beiden Gassäcken 14, 15 stützen sich diese gegenseitig ab und haben das Bestreben bedingt durch die konstruktive Überschneidung 19 der beiden Gassäcke 14, 15 in der Mitte, sich voneinander wegzubewegen. Dies wird einerseits durch die Gewebebrücke 17 und andererseits durch die Fixierlaschen 18, 18a verhindert. Bei optimaler Auslegung der Gewebebrücke 17 und der Fixierlaschen 18, 18a wird ein lagestabiles Airbagsystem gebildet, bei dem die Gassäcke 14, 15 in sich, mit dem Gehäuse 8, der Knieschutzeinrichtung 2 und der Instrumententafel 1 verspannt sind. Die Gassäcke 14, 15 sowie die Gewebebrücke 17 werden beispielsweise in einem sog. Drei-D-Webverfahren hergestellt, wodurch auf zusätzliche Nähte verzichtet werden kann.

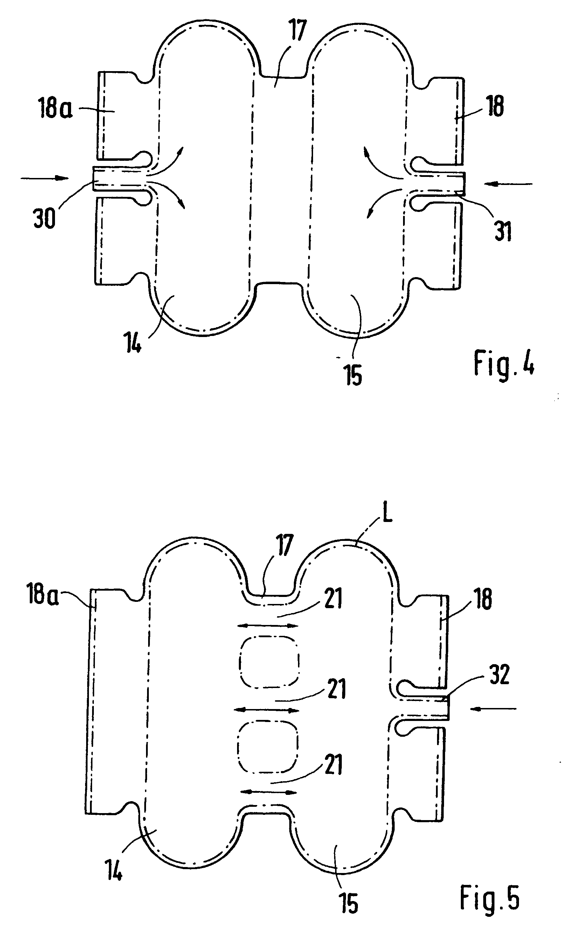

In Fig. 4 sind die beiden Gassäcke 14, 15 als Einzelheit näher dargestellt, die jeweils separat über die Öffnungen 30, 31 befüllt werden. In Fig. 5 ist eine zweite Ausführungsform der Gassäcke 14, 15 gezeigt, die über einen oder mehrere Überstromkanäle 21 miteinander verbunden sind. Bei dieser Variante wird der Gassack 15 über die Öffnung 32 befüllt und die Überstromkanäle 21 verbinden die beiden Gassäcke 14, 15 miteinander zur Befüllung.

## Patentansprüche

1. Knieschutzeinrichtung für Fahrzeuginsassen eines Kraftfahrzeugs mit einem Gassack, der sich in aufgeblasener Arbeitsstellung vor den Knien eines Fahrzeuginsassen erstreckt, **dadurch gekennzeichnet, dass** die Einrichtung (2) in der Arbeitsstellung (A) aus zumindest zwei im Fahrzeug querverlaufenden und - in Fahrzeuglängsrichtung gesehen - unmittelbar hintereinanderliegend angeordneten Gassäcken (14, 15) besteht, die auf der den Knien (13) zugewandten Seite über wenigstens eine flexible Brücke (17) miteinander verbunden und auf der den Knien (13) abgewandten Seite über Fixierlaschen (18, 18a) ortsfest am Fahrzeugaufbau gehalten sind, wobei die beiden Gassäcke (14, 15) der Einrichtung (2) in der Arbeitsstellung (A) - etwa in einer gemeinsamen Ebene Y-Y - angeordnet sind.

2. Knieschutzeinrichtung nach Anspruch 1, **dadurch gekennzeichnet, dass** die Gassäcke (14, 15) in Arbeitsstellung (A) unmittelbar aneinander liegen und sich zwischen den Gassäcken (14, 15) eine abgeplattete Fixierzone (19) ausbildet.

3. Knieschutzeinrichtung nach Anspruch 1, **dadurch gekennzeichnet, dass** die beiden Gassäcke (14, 15) etwa einen gleichen Querschnitt und eine gleiche Größe aufweisen.

4. Knieschutzeinrichtung nach Anspruch 1, **dadurch gekennzeichnet, dass** die beiden Gassäcke (14, 15) der Einrichtung (2) und die Brücke (17) einstückig in einem sog. Drei-D-Webverfahren herstellbar sind.

5. Knieschutzeinrichtung nach Anspruch 1, **dadurch gekennzeichnet, dass** die Gassäcke (14, 15) jeweils einzeln über eine Öffnung (30, 31) befüllbar sind und jeder Gassack (14, 15) über die Brücke (17) getrennt ist und einen selbständig wirkenden Gassack bildet.

6. Knieschutzeinrichtung nach Anspruch 1, **dadurch gekennzeichnet, dass** die Gassäcke (14, 15) über wenigstens einen Kanal (21) miteinander wirkverbunden sind und einer der Gassäcke (14 oder 15) eine Öffnung (32) zum Befüllen aufweist.

7. Knieschutzeinrichtung nach einem oder mehreren der vorhergehenden Ansprüche, **dadurch gekennzeichnet, dass** die Knieschutzeinrichtung (2) durch ein vorgefertigtes Modul (4) gebildet ist, das sich aus einem Gehäuse (8), wenigstens zwei zusammengefaltete Gassäcke (14, 15) und zumindest einem Gasgenerator (11) zusammensetzt, wobei das Modul (4) unter Zwischenschaltung eines Haltebleches (5) mit einem Querträger (7) einer Instrumententafel (1) fest verbunden ist.

8. Knieschutzeinrichtung nach einem oder mehreren der vorhergehenden Ansprüche, **dadurch gekennzeichnet, dass** die Gassäcke (14, 15) im Querschnitt kreisförmig ausgeführt sind und eine längliche Röhrenform aufweisen.

9. Knieschutzeinrichtung nach einem oder mehreren der vorhergehenden Ansprüche, **dadurch gekennzeichnet, daß** die Gassäcke (14, 15) ellipsenförmig ausgebildet sind.

10. Knieschutzeinrichtung nach einem oder mehreren der vorhergehenden Ansprüche, **dadurch gekennzeichnet, dass** die röhrenförmigen Gassäcke (14, 15) unterschiedliche Durchmesser aufweisen.

11. Knieschutzeinrichtung nach einem oder mehreren der vorhergehenden Ansprüche, **dadurch gekennzeichnet, dass** die verbindende Brücke (17) zwischen den beiden Gassäcken (14, 15) sich etwa über die gesamte Länge der Gassäcke (14, 15) erstreckt und tangential zu den Gassäcken (14, 15) angeordnet ist.

12. Knieschutzeinrichtung nach einem oder mehreren der vorhergehenden Ansprüche, **dadurch gekennzeichnet, dass** die beiden Gassäcke (14, 15) in Hochrichtung am Fahrzeugaufbau (35) abgestützt und in Fahrzeuglängsrichtung über die Fixierlaschen (18, 18a) ortsfest gehalten sind und die flexible Brücke (17) zwischen den Gassäcken (14, 15) etwa oberhalb der Knie angeordnet ist.

13. Knieschutzeinrichtung für Fahrzeuginsassen mit wenigstens einem Gassack, der sich in aufgeblasener Arbeitsstellung vor den Knien eines Fahrzeuginsassen erstreckt, **dadurch gekennzeichnet, dass** die Gassäcke (14, 15) als wenigstens ein Gaskissen ausgebildet sind, welches eine den Knien (13) zugerichtete flächige Abstützfläche aufweist.

14. Knieschutzeinrichtung nach Anspruch 15, **dadurch gekennzeichnet, dass** das Gaskissen mehrere nebeneinander angeordnete in Fahrzeugquerrichtung verlaufende Röhren umfaßt, die miteinander verbunden sind.

15. Knieschutzeinrichtung nach einem oder mehreren der vorhergehenden Ansprüche, **dadurch gekennzeichnet, dass** die Gassäcke (14, 15) oder die Gaskissen in einer Ruhestellung zusammengefaltet im Fahrzeugaufbau angeordnet sind.

## Claims

1. Knee protection device for vehicle occupants of a motor vehicle, with an airbag which, in the inflated working position, extends in front of the knees of a vehicle occupant, **characterized in that**, in the working position (A), the device (2) consists of at least two airbags (14, 15) which run transversely in the vehicle and, as seen in the vehicle longitudinal direction, are arranged directly one behind the other and which, on the side facing the knees (13), are connected to one another via at least one flexible bridge (17) and, on the side facing away from the knees (13), are held fixedly on the vehicle body via fixing straps (18, 18a), the two airbags (14, 15) of the device (2) being arranged, in the working position (A), approximately in a common plane (Y-Y).

2. Knee protection device according to Claim 1, **characterized in that**, in the working position (A), the airbags (14, 15) lie directly one against the other and a flattened fixing zone (19) is formed between the airbags (14, 15).

3. Knee protection device according to Claim 1, **characterized in that** the two airbags (14, 15) have approximately an identical cross section and an identical size.

4. Knee protection device according to Claim 1, **characterized in that** the two airbags (14, 15) of the device (2) and the bridge (17) can be produced in one piece by what is known as a three-D weaving method.

5. Knee protection device according to Claim 1, **characterized in that** the airbags (14, 15) can in each case be filled individually via an orifice (30, 31), and each airbag (14, 15) is separated via the bridge (17) and forms an independently acting airbag.

6. Knee protection device according to Claim 1, **characterized in that** the airbags (14, 15) are operatively connected to one another via at least one duct (21), and one of the airbags (14 or 15) has an orifice (32) for filling.

7. Knee protection device according to one or more of the preceding claims, **characterized in that** the knee protection device (2) is formed by a prefabricated module (4) which is composed of a housing (8), of at least two folded-together airbags (14, 15) and of at least one gas generator (11), the module (4) being fixedly connected to a crossmember (7) of an instrument panel (1), with a holding plate (5) interposed.

8. Knee protection device according to one or more of the preceding claims, **characterized in that** the airbags (14, 15) are designed with a circular cross section and have an elongate tube shape.

9. Knee protection device according to one or more of the preceding claims, **characterized in that** the airbags (14, 15) are of elliptic design.

10. Knee protection device according to one or more of the preceding claims, **characterized in that** the tube-shaped airbags (14, 15) have different diameters.

11. Knee protection device according to one or more of the preceding claims, **characterized in that** the connecting bridge (17) between the two airbags (14, 15) extends approximately over the entire length of the airbags (14, 15) and is arranged tangentially with respect to the airbags (14, 15).

12. Knee protection device according to one or more of the preceding claims, **characterized in that** the two airbags (14, 15) are supported in the vertical direction on the vehicle body (35) and are held fixedly in the vehicle longitudinal direction via the fixing straps (18, 18a), and the flexible bridge (17) between the airbags (14, 15) is arranged approximately above the knee.

13. Knee protection device for vehicle occupants, with at least one airbag which, in the inflated working position, extends in front of the knees of a vehicle occupant, **characterized in that** the airbags (14, 15) are designed as at least one air cushion which has a sheet-like supporting surface directed towards the knees (13).

14. Knee protection device according to Claim 13, **characterized in that** the air cushion comprises a plurality of tubes which are arranged next to one another and run in the vehicle transverse direction and which are connected to one another.

15. Knee protection device according to one or more of the preceding claims, **characterized in that** the airbags (14, 15) or the air cushions, when folded together in a position of rest, are arranged in the vehicle body.

## Revendications

1. Dispositif de protection des genoux pour les occupants d'un véhicule automobile avec un airbag qui s'étend dans la position de travail de façon à se gonfler devant les genoux d'un occupant d'un véhicule, **caractérisé en ce que** le dispositif (2) se compose, dans la position de travail (A), d'au moins deux airbags (14, 15) disposés transversalement dans le véhicule et - vus dans la direction longitudinale du véhicule - directement l'un derrière l'autre, lesdits airbags étant reliés entre eux sur le côté orienté vers les genoux (13) par l'intermédiaire d'au moins un pont flexible (17) et étant maintenus fixement sur place au niveau de la structure du véhicule sur le côté opposé aux genoux (13) par l'intermédiaire de brides de fixation (18, 18a), les deux airbags (14, 15) du dispositif (2) étant disposés dans la position de travail (A) - approximativement dans un plan commun Y-Y.

2. Dispositif de protection des genoux selon la revendication 1, **caractérisé en ce que** les airbags (14, 15) reposent directement l'un contre l'autre dans la position de travail (A) et prennent la forme, entre les airbags (14, 15), d'une zone de fixation (19) aplatie.

3. Dispositif de protection des genoux selon la revendication 1, **caractérisé en ce que** les deux airbags (14, 15) présentent approximativement une section transversale identique et une taille identique.

4. Dispositif de protection des genoux selon la revendication 1, **caractérisé en ce que** les deux airbags (14, 15) du dispositif (2) et le pont (17) peuvent être fabriqués d'un seul tenant au cours d'un procédé de tissage appelé en trois D.

5. Dispositif de protection des genoux selon la revendication 1, **caractérisé en ce que** les airbags (14, 15) peuvent respectivement être remplis individuellement à travers une ouverture (30, 31) et que chaque airbag (14, 15) est séparé par le pont (17) et forme un airbag à action autonome.

6. Dispositif de protection des genoux selon la revendication 1, **caractérisé en ce que** les airbags (14, 15) sont reliés entre eux de façon active via au moins un canal (21) et qu'un des airbags (14 ou 15) comporte une ouverture (32) de remplissage.

7. Dispositif de protection des genoux selon l'une quelconque des revendications précédentes ou plusieurs d'entre elles, **caractérisé en ce que** le dispositif de protection des genoux (2) est formé par un module (4) préfabriqué qui se compose d'un boîtier (8), d'au moins deux airbags (14, 15) pliés ensemble et d'au moins un générateur de gaz (11), le module (4) étant relié fixement à un longeron transversal (7) d'un tableau de bord (1) en intercalant une tôle de blocage (5).

8. Dispositif de protection des genoux selon l'une quelconque des revendications précédentes ou plusieurs d'entre elles, **caractérisé en ce que** les airbags (14, 15) prennent une forme circulaire en section transversale et prennent une forme tubulaire dans le sens de la longueur.

9. Dispositif de protection des genoux selon l'une quelconque des revendications précédentes ou plusieurs d'entre elles, **caractérisé en ce que** les airbags (14, 15) prennent une forme d'ellipse.

10. Dispositif de protection des genoux selon l'une quelconque des revendications précédentes ou plusieurs d'entre elles, **caractérisé en ce que** les airbags (14, 15) de forme tubulaire présentent des diamètres différents.

11. Dispositif de protection des genoux selon l'une quelconque des revendications précédentes ou plusieurs d'entre elles, **caractérisé en ce que** le pont (17) de jonction s'étend entre les deux airbags (14, 15), sur l'ensemble de la longueur des airbags (14, 15), et est disposé de façon tangentielle par rapport aux airbags (14, 15).

12. Dispositif de protection des genoux selon l'une quelconque des revendications précédentes ou plusieurs d'entre elles, **caractérisé en ce que** les deux airbags (14, 15) s'appuient au niveau de la structure du véhicule (35) dans la direction verticale et sont maintenus fixement sur place dans la direction longitudinale du véhicule par l'intermédiaire des brides de fixation (18, 18a) et **en ce que** le pont flexible (17) est disposé quelque peu au-dessus du genou entre les airbags (14, 15).

13. Dispositif de protection des genoux pour les occupants d'un véhicule avec au moins un airbag qui s'étend dans la position de travail gonflée devant les genoux d'un occupant d'un véhicule, **caractérisé en ce que** les airbags (14, 15) prennent au moins la forme d'un coussinet de gaz présentant une surface d'appui plate orientée vers les genoux (13).

14. Dispositif de protection des genoux selon la revendication 15, **caractérisé en ce que** le coussinet de gaz comprend plusieurs tubes s'étendant côte à côte disposés dans la direction transversale du véhicule, lesdits tubes étant reliés entre eux.

15. Dispositif de protection des genoux selon l'une quelconque des revendications précédentes ou plusieurs d'entre elles, **caractérisé en ce que** les airbags (14, 15) ou les coussinets de gaz sont disposés de façon repliée dans la structure du véhicule dans une position de repos.
